Europäisches Patentamt

**European Patent Office**

Office européen des brevets

(19)

(11) Numéro de publication: **0 077 286**
A1

# (12) DEMANDE DE BREVET EUROPEEN

(21) Numéro de dépôt: **82450013.6**

(22) Date de dépôt: **13.10.82**

(51) Int. Cl.³: **F 02 M 21/02**

(30) Priorité: **13.10.81 FR 8119366**

(43) Date de publication de la demande: **20.04.83**
**Bulletin 83/16**

(84) Etats contractants désignés: **AT BE CH DE FR GB IT LI LU NL SE**

(71) Demandeur: **GPL EQUIP; Société à responsabilité limitée de droit français, 42 rue Leberthon, F-33000 Bordeaux (FR)**

(72) Inventeur: **Baugier, Jean-Pierre, rue de l'Ecureuil, F-33320 Le Taillan Medoc (FR)**

(74) Mandataire: **Thebault, Jean-Louis, Cabinet Jean-Louis Thebault 3 rue du Professeur Demons, F-33000 Bordeaux (FR)**

(54) **Détendeur-vaporisateur à injection électronique pour moteur à gaz de pétrole liquéfié.**

(57) L'invention concerne un détendeur-vaporisateur à injection électronique pour moteur à gaz de pétrole liquéfié, du type comprenant un dispositif de détente réchauffé par de l'eau prélevée sur le circuit de refroidissement du moteur et destiné à envoyer dans la tubulure d'admission du moteur du gaz sous un débit régulé électroniquement à partir de la pression régnant dans ladite tubulure d'admission, ce détendeur-vaporisateur étant caractérisé en ce qu'il comprend:

— une chambre de détente à basse pression (4, 33) reliée, d'une part, par l'intermédiaire d'une soupape (5) à ressort taré de limitation de pression, à un réservoir de gaz de pétrole liquéfié et, d'autre part, par l'intermédiaire d'un système de vanne (9, 38), à une canalisation (15, 35) elle-même reliée à la tubulure d'admission, à proximité du papillon d'accélérateur (14), et

— des moyens pour commander ledit système de vanne de façon à laisser passer un débit de gaz fonction de la dépression régnant dans la tubulure d'admission au droit (ou non) du débouché de ladite canalisation (15, 35) d'injection du gaz.

— Application aux moteurs à gaz de pétrole liquéfié.

ACTORUM AG

- 1 -

DETENDEUR-VAPORISATEUR A INJECTION
ELECTRONIQUE POUR MOTEUR A GAZ
DE PETROLE LIQUEFIE

La présente invention concerne un détendeur-vaporisateur pour moteurs de véhicules automobiles fonctionnant au gaz de pétrole liquéfié.

Dans les véhicules ainsi équipés, le combustible est du gaz comprimé stocké sous forme liquide dans un réservoir approprié et qu'il est nécessaire de vaporiser avant de l'injecter dans un carburateur mélangeur.

Cette vaporisation s'effectue dans un détendeur-régulateur, réchauffé par de l'eau prélevée sur le circuit de refroidissement du moteur.

Le gaz ainsi obtenu est décomprimé par paliers successifs jusqu'à une pression voisine de la pression atmosphérique, puis envoyé au mélangeur qui doit recevoir l'exacte quantité correspondant au régime de fonctionnement du moteur.

Afin de bénéficier au maximum des avantages que présente le gaz de pétrole liquéfié par rapport à l'essence, sans altérer les performances du moteur, il est très important que le mélange gaz + air soit optimal à chaque instant.

Ceci nécessite la prise en compte de nombreux paramètres caractéristiques du fonctionnement du moteur et, aussi, de son environnement (température de l'air, pression atmosphérique, etc...).

Les dispositifs détendeurs actuellement disponibles sur le marché n'apportent pas de solution permettant d'atteindre l'optimum recherché. En effet, les détendeurs-vaporisateurs proposés par la majorité des fabricants sont constitués par des chambres de détente successives à 2 ou 3 étages, munies de membranes souples commandant les clapets de communication entre les étages haute, moyenne et basse pression.

Le détendeur basse pression alimente le moteur et reçoit un signal traduisant la dépression régnant dans la pipe d'admission, grâce à une prise pratiquée sur le mélangeur. Ceci permet de moduler le débit de gaz injecté en fonction de l'ouverture du papillon et donc du volume d'air admis dans le moteur.

Ce type de régulation simplifiée ne permet pas un titrage air/gaz précis et présente l'inconvénient d'un temps de réponse trop important des chambres à membranes en régime transitoire (accélération, décélération).

Le but de la présente invention est en premier lieu de réaliser une régulation beaucoup plus précise du titrage à tous les régimes et en particulier en régime transitoire.

A cet effet, l'invention a pour objet un détendeur-vaporisateur à injection électronique pour moteur à gaz de pétrole liquéfié, du type comprenant un dispositif de détente réchauffé par de l'eau prélevée sur le circuit de refroidissement du moteur et destiné à envoyer dans la tubulure d'admission du moteur du gaz sous un débit régulé électroniquement à partir de la pression régnant dans ladite tubulure d'admission, ce détendeur-vaporisateur étant caractérisé en ce qu'il comprend :

- une chambre de détente à basse pression reliée, d'une part, par l'intermédiaire d'une soupape à ressort taré de limitation de pression, à un réservoir de gaz de pétrole liquéfié et, d'autre part, par l'intermédiaire d'un système de vanne, à une canalisation elle-même reliée à la tubulure d'admission, à proximité du papillon d'accélérateur,

- et des moyens pour commander ledit système de vanne de façon à laisser passer un débit de gaz fonction de la dépression régnant dans la tubulure d'admission au droit (ou non) du débouché de ladite canalisation d'injection du gaz.

Suivant un mode de réalisation l'ouverture dudit système de vanne est proportionnelle au signal transmis par un transducteur de pression disposé dans ladite tubulure d'admission.

- 3 -

Suivant un autre mode de réalisation, le système de vanne est constitué d'un dispositif à clapet ou tiroir dont l'élément mobile de réglage est asservi en position à partir, d'une part, d'une boucle de correction de position, et d'autre part, de deux paramètres constitués respectivement par la valeur de la dépression dans ladite tubulure d'admission à l'instant du point mort bas des pistons et par le régime instantané du moteur, à ces deux paramètres étant éventuellement ajouté un troisième paramètre constitué par les températures de l'air comburant et du gaz carburant.

Le système de vanne peut être constitué et commandé de diverses manières comme on le verra plus loin dans la description détaillée qui va suivre.

Par ailleurs, afin d'améliorer encore le titrage du mélange air + gaz, le détenteur-vaporisateur selon l'invention comporte avantageusement, en outre, une électro-vanne interposée dans le circuit de réchauffage de carburant à partir d'eau prélevée dans le circuit de refroidissement du moteur, ladite électro-vanne étant commandée par un circuit électronique délivrant un signal proportionnel à l'écart entre la température du gaz injecté et celle de l'air dans la tubulure d'admission et élaboré à partir respectivement de deux sondes de températures disposées au voisinage de la buse d'injection de gaz et éventuellement complétées par une sonde auxiliaire prenant en compte la température de l'air au voisinage immédiat du circuit électronique.

Un tel circuit de contrôle permet de rapprocher la température du gaz injecté de celle de l'air comburant et donc d'obtenir un meilleur titrage du mélange à tous régimes.

Enfin, suivant une autre caractéristique de l'invention, le détendeur-vaporisateur peut être muni d'un dispositif de régulation du régime ralenti du moteur constitué d'une vis pointeau interposée dans un passage en dérivation reliant la chambre de détente à la canalisation d'injection du gaz, dans ladite dérivation étant également interposée une soupape commandée par un électro-aimant relié à un circuit délivrant un courant électrique en fonction d'impulsions électriques provenant du rupteur du système d'allumage.

D'autres caractéristiques et avantages ressortiront de la description qui va suivre, description donnée à

0077286

- 4 -

titre d'exemple uniquement et en regard des dessins annexés sur lesquels :

- Fig. 1 représente le schéma d'un premier mode de réalisation d'un détendeur-vaporisateur selon l'invention ;
- Fig. 2 illustre le principe d'un second mode de réalisation ;
- Fig. 3 illustre une variante de réalisation du dispositif de la Fig. 2 ;
- Fig. 4 représente une variante de réalisation de la boucle d'asservissement du dispositif de la Fig. 3, et
- Fig. 5 illustre le principe d'un autre mode de réalisation.

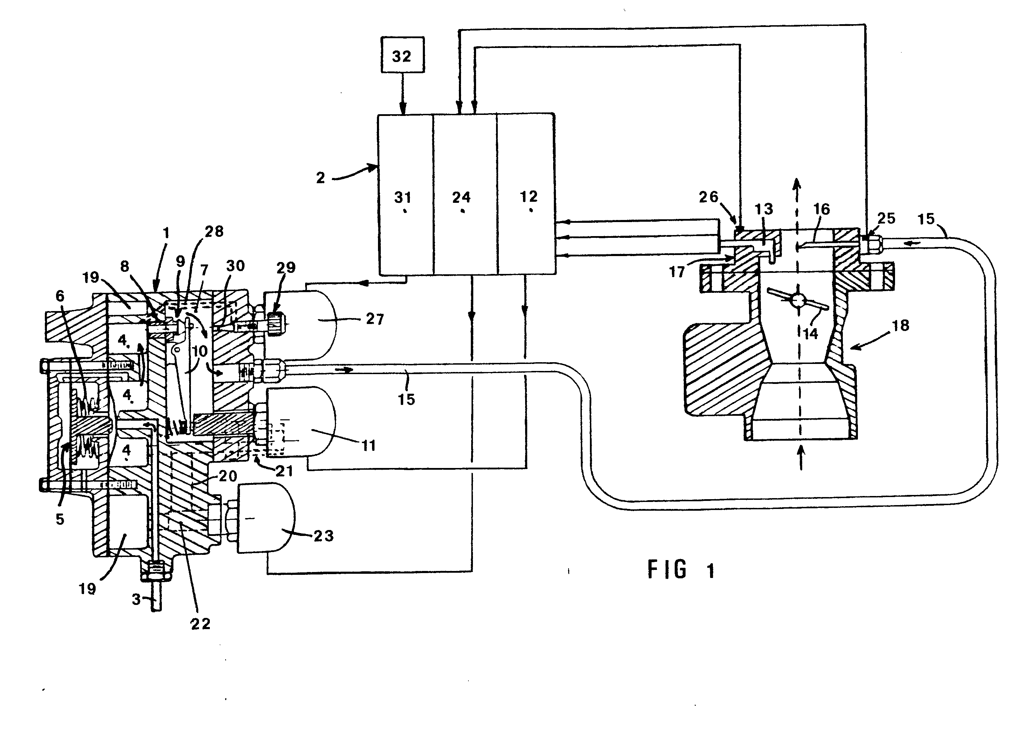

Dans le mode de réalisation représenté sur la Fig. 1, le détendeur-vaporisateur est constitué d'un boîtier d'aluminium 1 relié par des conducteurs électriques à un boîtier électronique étanche 2 lui-même connecté à un certain nombre de capteurs-transducteurs disposés en certains endroits des circuits de carburation et d'allumage d'un moteur de véhicule automobile fonctionnant au gaz de pétrole liquéfié.

Le réservoir de gaz liquéfié (non représenté) est relié par une canalisation 3 à une première chambre de détente 4 dont l'entrée est régulée par une soupape 5 de limitation de la pression, dans la chambre 4, du gaz liquide provenant du réservoir. Cette limitation s'opère grâce à un ressort taré 6 et tient compte de la pression atmosphérique.

La chambre 4 communique avec une seconde chambre de détente 7 de volume relativement faible, par l'intermédiaire d'un passage 8 dans lequel est interposée une soupape 9 commandée par un levier 10 lui-même commandé par un électro-aimant 11.

Le solénoïde de l'électro-aimant 11 est relié à un circuit électronique 12 délivrant un courant électrique élaboré à partir de la valeur de la dépression régnant dans la pipe d'admission.

A cet effet, il est prévu un transducteur capteur de pression 13 disposé dans la tubulure d'admission immédiatement en aval du papillon d'accélérateur 14.

Le gaz de la chambre 7 est envoyé par une canalisation 15 dans une buse d'injection 16 disposée également immédiatement en aval du papillon.

- 5 -

Avantageusement le capteur de pression 13 et la buse d'injection 16 sont montés en regard l'un de l'autre dans une bride spéciale 17 rapportée sur la bride aval du carburateur 18 (et pouvant également être montée en amont).

Suivant une autre caractéristique du détenteur-vaporisateur selon l'invention, il est prévu un circuit de régulation de la température du gaz injecté en fonction de la température de l'air dans la pipe d'admission.

A cet effet, le boîtier 1 comporte un circuit de réchauffage connu en lui-même et comportant une chambre annulaire 19 entourant la chambre 4 et alimentée en eau chaude à partir du circuit de refroidissement du moteur. On a représenté en tiretés en 20 le circuit d'arrivée d'eau chaude dans la chambre 19 et en 21 un raccord de connection du circuit audit circuit de refroidissement.

Dans le circuit 20, à l'entrée dans la chambre 19, est interposée une soupape 22 de contrôle commandée par un électro-aimant 23. Le solénoïde de l'électro-aimant 23 reçoit un courant électrique élaboré par un circuit 24 à partir des températures détectées par deux sondes 25 et 26 montées, l'une (25), sur le raccord de la buse 16 d'injection du gaz et, l'autre (26), de l'autre côté de la bride 17, au droit du capteur de pression 13.

Enfin, suivant une autre caractéristique du détendeur-vaporisateur, il est prévu un circuit de régulation du régime de ralenti comprenant un électro-aimant 27 agissant sur une soupape (non représentée) interposée dans un passage en dérivation 28 reliant directement la chambre 4 à la canalisation 15 par l'intermédiaire de la chambre 7. Dans ce passage 28 est également interposée une vis pointeau 29 coopérant avec un siège conique 30 ménagé dans ledit passage 28.

Le solénoïde de l'électro-aimant 27 reçoit un courant électrique de commande en provenance du circuit 31 et élaboré à partir d'impulsions électriques provenant du rupteur 32 du système d'allumage du moteur.

Le fonctionnement du détendeur-vaporisateur décrit ci-dessus est le suivant.

Le gaz est admis en phase liquide dans la première chambre de détente 4 sous le contrôle du limiteur de pression constitué par la soupape 5 et se vaporise au moins partiellement. Ainsi la pression du gaz dans la chambre 4 est limitée à une valeur déterminée par la force du ressort 6 et également la pression atmosphérique puisque le logement du ressort 6 est à l'atmosphère.

A titre d'exemple, la pression de gaz en amont de la soupape 9 est ramenée entre 0,5 et 1 bar. On peut prévoir un dispositif auxiliaire de réglage de la force du ressort 6.

Le gaz est ensuite admis dans la seconde chambre de détente 7 sous la commande de la soupape 9 de façon à avoir dans la chambre une pression faible contrôlée en permanence par le circuit 12. Celui-ci, à partir des variations de dépression détectées par le capteur 13, en fonction de la position du papillon 14, délivre à l'électro-aimant 11 un courant d'excitation réglant la position du levier 10 de façon que l'admission du gaz dans la chambre 7 s'opère en sorte que la pression d'injection du gaz dans la tubulure d'admission se fasse à tous régimes avec un rapport air-gaz précis et beaucoup plus proche de la valeur optimale que ne le permettent les détendeurs-vaporisateurs actuels et avec un temps de réponse en régime transitoire nettement plus court.

Les deux autres circuits de régulation (réchauffage du gaz et ralenti) concourent à améliorer encore le titrage du mélange air-gaz à chaque instant et à assurer ainsi une excellente carburation.

Le réchauffage du gaz à partir d'eau chaude prélevée sur le circuit de refroidissement du moteur est utilisé couramment. Les calories ainsi apportées facilitent la vaporisation et préchauffent le gaz pour éviter le phénomène de congélation lié à l'expansion du gaz dans le détendeur.

Dans les dispositifs connus, la circulation de l'eau est commandée par un simple thermostat. L'absence d'une régulation de la température du gaz, par rapport à la température de l'air entrant dans le mélangeur, est défavorable aux performances globales de l'installation.

C'est précisément le but de l'invention que de réguler grâce à l'électro-aimant 23 et au circuit électronique 24 de commande la température du gaz injecté par rapport à celle de l'air.

- 7 -

Le signal fourni par le circuit 24 à l'électro-aimant à partir des données en température fournies par les sondes 25,26 détermine le débit de la circulation d'eau chaude dans la chambre 19 en vue d'avoir l'adéquation la plus parfaite possible à tout instant entre les deux températures en question au sein du mélangeur. Eventuellement, on peut prévoir une sonde auxiliaire de correction de la température de l'air et prenant en compte la température de l'air à l'intérieur du boîtier électronique 2, cette sonde auxiliaire fonctionnant par exemple en parallèle avec la sonde 26.

Quant au circuit 27-31 de régulation du ralenti, il détermine lorsque l'accélérateur est au repos et que, par suite, la soupape 9 est fermée, la position précise au ralenti de la vis pointeau 29 par rapport à son siège 30 à partir des impulsions provenant du rupteur du système d'allumage. Ce circuit de réglage du ralenti est donc totalement indépendant du circuit de carburation et est pratiquement indéréglable.

Bien entendu, lorsque le moteur est coupé, l'électro-aimant 27 positionne la soupape interposée dans la dérivation 28 de façon à interrompre totalement le passage de gaz en direction de la chambre 7 et de la canalisation 15.

Il est à noter que les divers électro-aimants 11-23 et 27 peuvent être remplacés par d'autres systèmes moteurs équivalents tels des moteurs électriques.

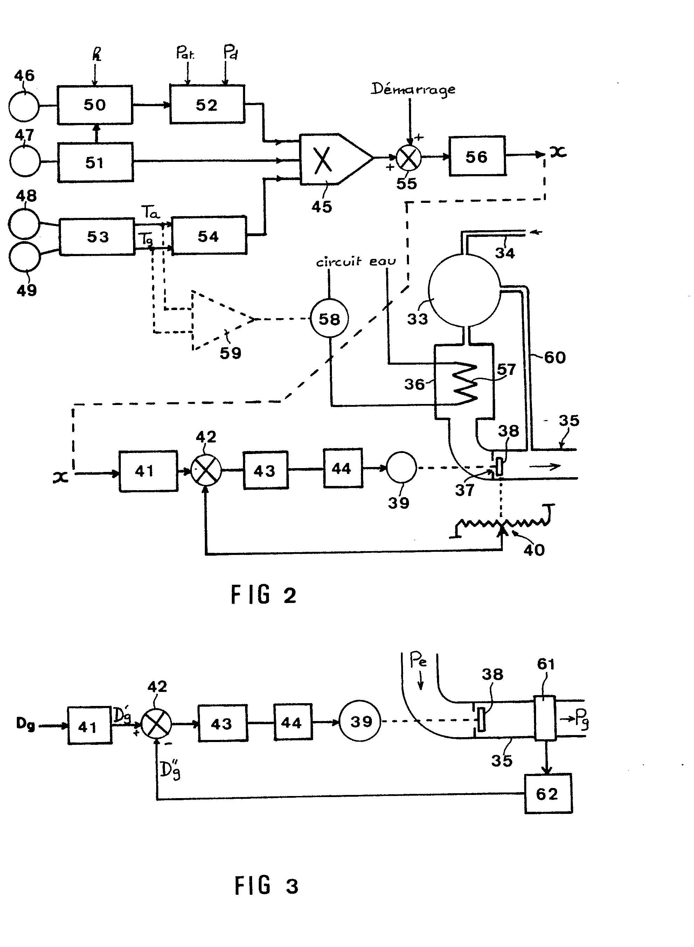

La Fig. 2 représente schématiquement un autre mode de réalisation d'un détendeur-vaporisateur selon l'invention. Suivant ce mode de réalisation, on a schématisé en 33 une chambre de détente reliée, d'une part, à un réservoir de gaz de pétrole liquéfié (non représenté) par l'intermédiaire d'une canalisation 34 et, d'autre part, à la canalisation d'admission 35 par l'intermédiaire d'une seconde chambre 36. En amont de la canalisation 35 est disposé un étranglement 37 muni d'un clapet mobile 38 actionné par un moteur électrique 39.

Le moteur 39 est asservi, d'une part, à l'aide d'un potentiomètre de correction 40 dont le curseur mobile est lui-même asservi au déplacement du clapet 38 et, d'autre part, à partir d'un certain nombre de paramètres, à l'aide d'un signal résultant x après mise en forme dans un conformateur 41, sommation en 42 avec le signal provenant de 40 et traitement en 43 (gain, correction) et 44 (puissance).

Le signal x est élaboré par des circuits multiplicateurs 45 prenant en compte deux paramètres principaux :

- la dépression dans la tubulure d'admission, à l'aide d'un d'un capteur de pression 46 ; et

- le régime moteur, à partir par exemple d'un rupteur 47 ;

et des paramètres auxiliaires :

. la pression nominale du détendeur Pd,

. la pression atmosphérique Pat,

. la température de l'air Ta admis dans la tubulure, à partir d'un capteur ou sonde de température 48, et

. la température du gaz Tg admis dans la tubulure, à partir d'un capteur ou sonde de température 49.

Si le capteur 46 est un capteur de pression différentielle, il est relié à un circuit de mesure de pression 50 fournissant une tension proportionnelle à la pression absolue dans la tubulure d'admission au moment précis de la fin du cycle d'admission grâce à un échantillonnage du signal issu du capteur de pression 46 au moyen d'une impulsion donnée par un circuit de mesure tachymétrique 51. Ce dernier délivre en effet en sortie une tension proportionnelle au régime moteur et est constitué d'un étage de filtrage et de mise en forme du signal issu du rupteur 47.

Ce premier étage commande un circuit monostable fournissant une impulsion calibrée pour l'allumage. Ces impulsions sont transformées en une tension continue par un filtre passe-bas.

L'impulsion donnée à 50 par le circuit tachymétrique 51 est mémorisé jusqu'à l'admission suivante.

Le signal de sortie de 50 est envoyé dans les circuits multiplicateurs 45 par l'intermédiaire d'un circuit de correction de pression 52. Ce circuit effectue la multiplication de la pression absolue dans la tubulure d'admission par une fonction de correction F(p) dépendant de l'endroit d'injection du gaz (en amont ou en aval du papillon).

Dans le cas de la Fig. 2, (injection en aval) ladite fonction de correction est du type :

$$F(p) = \frac{1}{\sqrt{Pd.Pat}} = cte$$

Il s'agit donc d'une simple modification du gain du circuit

- 9 -

de traitement.

Des circuits 53 de mesure de température reliés aux deux sondes ou capteurs 48 et 49 délivrent les deux signaux de températures, de l'air Ta et du gaz Tg, à un circuit de correction en température 54 constitué par exemple par un étage amplificateur dont le gain est proportionnel à la résistance d'une thermistance CTN au contact avec l'air ambiant.

Les sorties des circuits 51, 52 et 54 sont reliées aux circuits multiplicateurs 45 lesquels délivrent le signal x après passage dans un sommateur 55 et dans un circuit d'ajustage de gain 56. Le sommateur 55 permet d'ajouter l'information d'injection pour le démarrage à froid et le circuit 56 permet d'ajuster le gain de l'ensemble aux caractéristiques du moteur et de l'asservissement.

On a également représenté sur la Fig. 2 le circuit 57 de réchauffage du gaz dans la chambre 36 à l'aide du circuit d'eau de refroidissement du moteur. Une électrovanne 58 est interposée dans ce circuit et est pilotée par un comparateur 59 recevant les signaux de température Ta et Tg et fermant le circuit lorsque Tg > Ta.

Enfin, il est prévu une boucle de régulation de la pression différentielle du gaz dans le détendeur constituée par une canalisation de retour 60 reliant la canalisation 35 immédiatement en aval du clapet 38 à la chambre de détente 33. Cette boucle asservit la pression du gaz (à la sortie de 36) à la pression d'injection du gaz (pression en aval du clapet 38), la pression de sortie du gaz étant supérieure à la pression d'injection d'une quantité constante qui est la pression nominale du détendeur par rapport à la pression atmosphérique.

Le moteur 39 est par exemple un micro-moteur à courant continu dont l'axe est solidaire d'une came commandant l'ouverture du clapet 38 par l'intermédiaire d'un bras de levier. Le profil de la came peut être étudié de manière à obtenir une parfaite linéarité du débit de gaz par rapport à la variable de commande x, auquel cas le conformateur 41 peut être supprimé.

Le dispositif représenté sur la Fig. 2 permet d'ajuster le débit de gaz à une valeur très proche, à tout

0077286

instant, du dosage théorique pour lequel le moteur fonctionne dans de bonnes conditions de rendement et de puissance avec une production d'oxyde de carbone acceptable (0,2 à 0,3%) grâce à l'excellente connaissance que permet d'avoir le système capteurs-calculateurs de la masse d'air entrant dans la tubulure d'admission et au très bon contrôle de la masse de gaz injecté.

·Différentes variantes peuvent être par ailleurs apportées au schéma de la Fig. 2. C'est ainsi que le circuit 54 de correction de température peut être supprimé, la correction de température d'effectuant à partir d'une sonde CTN reliée à un circuit amplificateur inséré entre les circuits multiplicateurs 45 et le sommateur 55.

L'étage 52 sera modifié légèrement si le gaz est injecté en amont du papillon du carburateur et non plus en aval, la fonction de correction n'étant plus alors la même.

On peut également supprimer l'électrovanne 58 et réchauffer en continu le gaz auquel cas la fonction de correction de température doit être modifiée en conséquence dans le circuit 54. Cette modification de correction peut aussi être introduite en fusionnant les circuits 53 et 54 en un seul circuit inséré entre les circuits multiplicateurs 45 et le circuit 50 (ou bien le circuit 51).

La Fig. 3 illustre une variante suivant laquelle la variable de commande du clapet 38 est le débit massique du gaz Dg. Il n'y a plus de capteur de déplacement du clapet 38 mais un débitmètre 61 et son électronique associée 62 fournissant une tension D"g proportionnelle au débit massique réel du gaz. L'asservissement ainsi réalisé corrige à chaque instant la position du clapet 38 de telle manière que $D'g = D''g$. $D'g$ est le signal de sortie du conformateur 41 recevant le signal Dg délivré par un circuit analogue à l'ensemble 46 à 56 de la Fig. 2 dans lequel la correction en température 54 peut être supprimée.

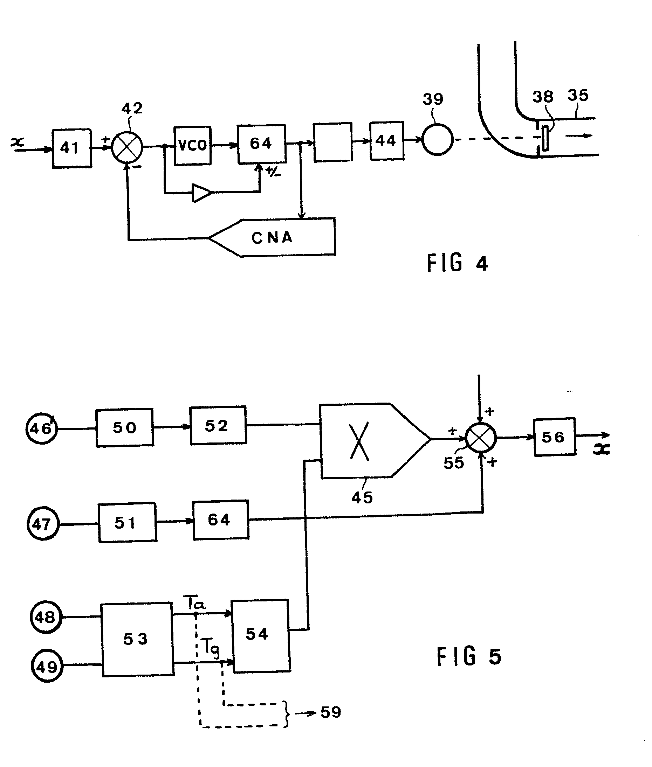

La correction en déplacement du clapet 38 peut aussi se faire comme représenté sur la Fig. 4 par une boucle constituée par un circuit convertisseur - numérique - analogique C N A transformant l'état des sorties d'un compteur/décompteur 64 en une tension x" qui est proportionnelle à la rotation effectuée par un moteur 39 pas à pas.

Toutes les fonctions mentionnées ci-dessus et qui sont traitées par le calcul analogique peuvent l'être également par calcul numérique. On pourra ainsi dans le cas spécifique de la Fig. 4 commander directement le moteur pas à pas 39.

La Fig. 5 illustre une variante dans laquelle le régime du moteur n'est plus pris en compte. Les circuits multiplicateurs 45 sont reliés aux organes 46' à 56 identiques ou analogues à ceux de la Fig. 2. Toutefois, ici, le capteur 46' est un capteur de la dépression en amont du papillon du carburateur. De plus, le circuit 51 est relié à un circuit de ralenti 64 lui-même relié au sommateur 55 et chargé de commander l'injection (en aval du papillon) en dessous d'un certain régime et en période d'accélération. Le signal x provenant de 56 attaque un circuit tel que le circuit 41-44 de la Fig. 2.

Suivant une variante de la Fig. 5, on peut supprimer le circuit de correction de température 54 ainsi que 45 qui n'a plus de raison d'être et intégrer la fonction de 52 dans 56 en effectuant une injection du gaz en amont du papillon du carburateur.

Dans le cadre du dispositif de la Fig. 5 on peut aussi prévoir un contrôle débitmétrique du même type que sur la Fig. 3 en utilisant directement la dépression en amont du papillon comme variable de commande, en faisant une injection de gaz en amont du papillon et une correction en température.

Enfin, l'invention n'est évidemment par limitée aux modes de réalisation représentés et décrits ci-dessus mais en couvre au contraire toutes les variantes.

0077286

- 1 -

REVENDICATIONS
:=:=:=:=:=:=:=:=:=:=:=:=:=:

1. Détendeur-vaporisateur à injection électronique pour moteur à gaz de pétrole liquéfié, du type comprenant un dispositif de détente réchauffé par de l'eau prélevée sur le circuit de refroidissement du moteur et destiné à envoyer dans la tubulure d'admission du moteur du gaz sous un débit régulé électroniquement à partir de la pression régnant dans ladite tubulure d'admission, ce détendeur-vaporisateur étant caractérisé en ce qu'il comprend :
   - une chambre de détente à basse pression (4,33) reliée, d'une part, par l'intermédiaire d'une soupape (5) à ressort taré de limitation de pression, à un réservoir de gaz de pétrole liquéfié et, d'autre part, par l'intermédiaire d'un système de vanne (9,38), à une canalisation (15, 35) elle-même reliée à la tubulure d'admission, à proximité du papillon d'accélérateur (14), et
   - des moyens pour commander ledit système de vanne de façon à laisser passer un débit de gaz fonction de la dépression régnant dans la tubulure d'admission au droit (ou non) du débouché de ladite canalisation (15,35) d'injection du gaz.

2. Détendeur-vaporisateur suivant la revendication 1, caractérisé en ce que ledit système de vanne est constitué par une soupape (9) interposée entre ladite chambre de détente (4), ou première chambre de détente, et une seconde chambre de détente (7), de faible volume, ladite soupape (9) étant commandée par un électro-aimant (11) ou analogue recevant un signal électrique de commande proportionnel au signal transmis par un transducteur de pression (13) disposé dans ladite tubulure d'admission au droit du débouché de ladite canalisation d'injection du gaz (15).

3. Détendeur-vaporisateur suivant la revendication 2, caractérisé en ce que le gaz est injecté par l'intermédiaire d'une buse d'injection (16) montée sur une bride amovible (17) sur laquelle est églameent monté ledit transducteur

- 2 -

de pression (13), la bride étant fixée sur la bride aval du carburateur-mélangeur (18), à proximité immédiate du papillon (14).

4. Détendeur-vaporisateur suivant l'une des revendications 2 ou 3, caractérisé en ce qu'il comporte, en outre, un dispositif de régulation du régime ralenti du moteur constitué d'une vis pointeau (29) interposée dans un passage en dérivation (28) reliant ladite première chambre de détente (4) à la canalisation d'injection de gaz (15), dans ladite dérivation (28) étant également interposée une soupape commandée par un électro-aimant (27) ou analogue relié à un circuit (31) délivrant un courant électrique en fonction d'impulsions électriques provenant du rupteur du système d'allumage (32), en vue de régler le ralenti à partir de la vitesse de rotation du moteur.

5. Détendeur-vaporisateur suivant la revendication 1, caractérisé en ce que ledit système de vanne est constitué par un dispositif à clapet (38) ou tiroir dont l'élément mobile de réglage (38) est asservi en position à partir, d'une part, d'une boucle de correction de position (40) et, d'autre part, de deux paramètres constitués respectivement par la valeur de la dépression dans ladite tubulure d'admission à l'instant du point mort bas des pistons et par le régime instantané du moteur.

6. Détendeur-vaporisateur suivant la revendication 5, caractérisé en ce qu'aux deux paramètres susdits est ajouté un troisième paramètre constitué par les températures (Ta,Tg) de l'air comburant et du gaz carburant.

7. Détendeur-vaporisateur suivant les revendications 5 et 6, caractérisé en ce qu'il comporte un capteur de pression différentielle (46) disposé dans la tubulure d'admission en aval du papillon du carburateur et relié à un dispositif multiplicateur (45) par l'intermédiaire de circuits de mesure (50) et de correction (52), un circuit de mesure tachymétrique (51) relié au rupteur (47) audit dispositif multiplicateur (45) et audit circuit de mesure (50) de façon à communiquer à ce dernier un signal d'échantillonnage de la pression instantanée dans ladite tubulure d'admission audit point mort bas, deux sondes de températures d'air (48) et de gas (49) reliées audit circuit multiplicateur (45) par l'intermédiaire d'un circuit de mesure (53) et d'un circuit de correction en température (54), ledit dispositif multiplicateur (45) délivrant un signal qui, après correction (56) et mise en forme (41), sert à la commande d'un moteur électrique (39) actionnant ledit clapet (38).

8. Détendeur-vaporisateur suivant la revendication 7, caractérisé en ce qu'il comporte une boucle de régulation de la pression différentielle du gaz constituée par une canalisation de retour (60) reliant ladite canalisation (35) immédiatement en aval du clapet (38) à la chambre de détente (33).

9. Détendeur-vaporisateur suivant la revendication 1, caractérisé en ce que ledit système de vanne est constitué par un clapet (38) actionné par un moteur électrique (39) asservi à partir d'un premier paramètre constitué par la valeur de la dépression régnant en amont du papillon (14) du carburateur et d'un second paramètre constitué par les valeurs des températures d'air (Ta) et de gaz (Tg) dans la tubulure d'admission, ladite température d'air (Ta) étant éventuellement corrigée à partir d'une sonde auxiliaire de mesure de la température de l'air ambiant, et en ce qu'il comporte un circuit de ralenti (64) relié au rupteur (47) et agissant de façon à commander l'injection du gaz en dessous d'un certain régime du moteur et en période d'accélération.

10. Détendeur-vaporisateur suivant l'une des revendications 1 à 9, caractérisé en ce qu'il comporte, en outre, une électrovanne (22,23; 58) ou analogue, interposée dans le circuit de réchauffage du carburant à partir d'eau prelevée dans le circuit de refroidissement du moteur, ladite électrovanne étant commandée par un circuit (24,59) délivrant un signal proportionnel à l'écart entre la température (Tg) du gaz injecté et celle de l'air (Ta) dans la tubulure d'admission et élaboré à partir de deux sondes de températures (25,26; 49, 48) disposées au voisinage de la buse d'injection de gaz (16).

FIG 1

FIG 2

FIG 3

FIG 4

FIG 5

Office européen
des brevets

**RAPPORT DE RECHERCHE EUROPEENNE**

Numéro de la demande

EP   82  45  0013

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | **---** | | F 02 M  21/02 |
| A | CH-A-  609 789  (LASER-GRADE) <br> * page 2, colonne de droite, lignes 9-51; page 4, colonne de droite, lignes 33-68; page 5, colonne de gauche, lignes 1-5, 16; colonne de droite, lignes 1-16 * | 1 | |
| | **---** | | |
| A | DE-A-2 361 358 (MESSER-GRIESHEIM) <br> * page 1, alinéa 1; page 2, point C; page 3, 2 derniers alinéas; page 4, dernier alinéa; page 5, alinéa 2 * | 1 | |
| | **---** | | |
| A | DE-C-  698 447  (PALLAS APPARATE) <br> * page 1, lignes 39-44; page 2, lignes 1-23 * | 1 | — |
| | | | **DOMAINES TECHNIQUES RECHERCHES (Int. Cl. ³)** |
| | **---** | | |
| A | US-A-2 821 843  (MENGELKAMP) <br> * colonne 3, lignes 37-65 * | 10 | F 02 M <br> F 02 D |
| | **---** | | |
| A | US-A-3 136 613  (BICKLER) <br> * colonne 1, lignes 10-14; colonne 8, lignes 52-75; colonne 9, lignes 1-8; colonne 13, lignes 19-26 * | 4 | |
| | **---** | | |
| A | US-A-2 664 872  (ERICSON) <br> * figure 2; colonne 4, lignes 11-21 * | 10 | |
| | **---**          -/- | | |

Le présent rapport de recherche a été établi pour toutes les revendications

| Lieu de la recherche <br> LA HAYE | Date d'achèvement de la recherche <br> 18-01-1983 | Examinateur <br> JORIS J.C. |
|---|---|---|

CATEGORIE DES DOCUMENTS CITES

X : particulièrement pertinent à lui seul
Y : particulièrement pertinent en combinaison avec un autre document de la même catégorie
A : arrière plan technologique
O : divulgation non écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

0077286

Office européen
des brevets

**RAPPORT DE RECHERCHE EUROPEENNE**

Numéro de la demande

EP  82 45 0013

| | **DOCUMENTS CONSIDERES COMME PERTINENTS** | | Page  2 |
|---|---|---|---|
| Categorie | Citation du document avec indication, en cas de besoin, des parties pertinentes | Revendication concernée | CLASSEMENT DE LA DEMANDE (Int. Cl. ³) |
| A | FR-A-2 446 927  (BIAGLIOTTI) | | |
| E,X | EP-A-0 064 373  (EMCO WHEATON INT. LTD.) <br> * page 2, dernier 2 alinéas; pages 3,4,5,6; page 7, premier et dernier alinéa; page 8, en entier; page 9, les 2 premiers alinéas; page 11, alinéa 1; page 12, en entier; page 13, point 1; page 15, dernier alinéa; page 16, lignes 1-14 * | 1 | |
| | | | DOMAINES TECHNIQUES RECHERCHES (Int. Cl. ³) |

Le présent rapport de recherche a été établi pour toutes les revendications

| Lieu de la recherche <br> LA HAYE | Date d'achèvement de la recherche <br> 18-01-1983 | Examinateur <br> JORIS J.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant